**Europäisches Patentamt**

**European Patent Office**

**Office européen des brevets**

(19)

(11) Veröffentlichungsnummer: **0 282 732 B1**

## EUROPÄISCHE PATENTSCHRIFT

(12)

(45) Veröffentlichungstag der Patentschrift: **23.09.92**

(51) Int. Cl.5: **G01D 5/244**

(21) Anmeldenummer: **88101936.8**

(22) Anmeldetag: **10.02.88**

(54) **Schaltungsanordnung zur Auswertung der Signale eines induktiven Messwertaufnehmers.**

(30) Priorität: **13.03.87 DE 3708210**

(43) Veröffentlichungstag der Anmeldung:
**21.09.88 Patentblatt 88/38**

(45) Bekanntmachung des Hinweises auf die
Patenterteilung:
**23.09.92 Patentblatt 92/39**

(84) Benannte Vertragsstaaten:
**DE FR GB**

(56) Entgegenhaltungen:
**DE-A- 3 324 061**
**DE-A- 3 433 777**

**LINEAR DATABOOK, 1982, National Semiconduction Corp., Santa Clara, Seiten 1,5-47**

(73) Patentinhaber: **ROBERT BOSCH GMBH**
**Postfach 30 02 20**
**W-7000 Stuttgart 30(DE)**

(72) Erfinder: **Kniss, Helmut, Dipl.-Ing.(FH)**
**Schmidener Strasse 32**
**W-7050 Waiblingen(DE)**
Erfinder: **Schmidt, Wolfgang**
**Erlenweg 5**
**W-7143 Vaihingen/Enz(DE)**

## Beschreibung

Die Erfindung geht aus von einer Schaltungsanordnung zur Auswertung der Ausgangssignale eines an einer Brennkraftmaschine befindlichen induktiven Meßwertaufnehmers nach der Gattung des Anspruchs 1.

Eine derartige Schaltungsanordnung ist bereits aus der DE-OS 34 33 777 bekannt. Dabei wird ein induktiver Geber, beispielsweise ein Kurbelwellenwinkelgeber an einer Brennkraftmaschine über einen Spannungsteiler gleichstrommäßig mit dem Eingang eines Schmitt-Triggers und eines Spitzenwertdetektors verbunden. Die Triggerschwelle des Schmitt-Triggers wird in Abhängigkeit vom Ausgangssignal des Spitzenwertdetektors verstellt.

Eine Einrichtung zur Detektion von Markierungselementen an einem rotierenden Körper, bei der ein Induktivgeber die Markierungen abtastet, ist aus der DE-OS 33 24 061 bekannt. Die Auswerteschaltung dieser Einrichtung weist zwei Spitzenwertdetektoren auf, für jede Polarität einen, und außerdem zwei Komparatoren, die dann schalten, wenn das zugeführte Signal einen Schwellwert überschreitet. Damit eine Auswertung auch bei kleinen Druckzahlen und kleinen Ausgangssignalen des Induktivgebers möglich ist, werden die Schwellwerte drehzahlabhängig verändert.

Die Aufgabe der Erfindung besteht darin, die Eigenverstellung, die durch eine Amplitudenänderung des Meßsignales auftritt, zu vermeiden, wobei Gebertoleranzen und Temperaturänderungen keine Auswirkungen auf die Genauigkeit haben sollten. Gelöst wird diese Aufgabe mit den kennzeichnenden Merkmalen des Anspruchs 1.

## Vorteile der Erfindung

Die erfindungsgemäße Schaltungsanordnung hat den Vorteil, daß sich Gebertoleranzen und Temperaturänderungen nicht auf das Ausgangssignal auswirken. Erfindungsgemäß ist dazu ein zwischen dem induktiven Meßwertaufnehmer und der Schaltungsanordnung geschalteter Koppelkondensator und ein Ladungsausgleichswiderstand für den Koppelkondensator sowie ein Mitkopplungskondensator vorgesehen. Besonders vorteilhaft ist es, daß eine Zeitinformation aus dem vom Meßwertaufnehmer abgegebenen Signal ableitbar ist, ohne daß eine Eigenverstellung durch eine Amplitudenänderung des Meßssignals auftritt. Ferner werden Exemplarstreuungen der induktiven Meßwertaufnehmer ausgeglichen.

Durch die in den abhängigen Ansprüchen aufgeführten Maßnahmen sind vorteilhafte Weiterbildungen der im Anspruch 1 angegebenen Schaltungsanordnung möglich. Es ist ein Spitzenwertdetektor für das vom induktiven Meßwertaufnehmer abgegebene Signal mit einem Schalter, vorzugsweise einer Diode, und einem Kondensator vorgesehen. Vorteilhaft wirkt sich die dynamische Mitkopplung, mit der ein als Vergleicher beschalteter Differenzverstärker versehen ist, aus.

In einer weiteren Ausgestaltung der erfindungsgemäßen Schaltungsanordnung ist zwischen dem Spitzenwertdetektor und dem Vergleicher ein Verstärker vorgesehen. Damit ist der Einfluß einer Schwellennachführung für den Vergleicher in weiten Grenzen beeinflußbar.

Die erfindungsgemäße Schaltung ist besonders geeignet für die Auswertung der Signale eines Nadelhubsensors, der empfindlich ist auf die Düsennadel einer Kraftstoff-Einspritzdüse einer Brennkraftmaschine.

Weitere Einzelheiten und vorteilhafte Weiterbildungen der erfindungsgemäßen Schaltungsanordnung ergeben sich aus weiteren abhängigen Ansprüchen in Verbindung mit der folgenden Beschreibung.

## Zeichnung

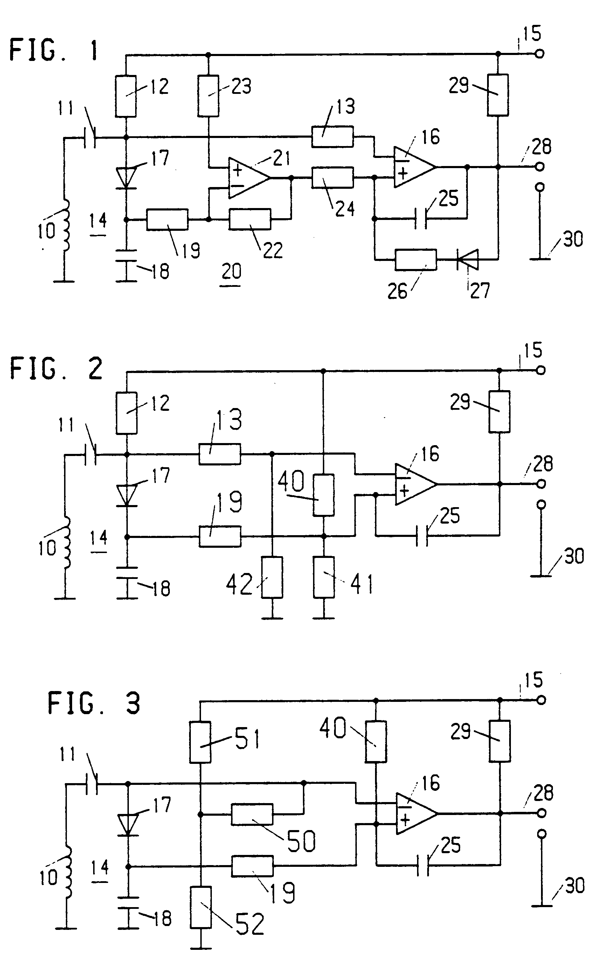

Die Figuren 1 bis 3 zeigen Schaltbilder von drei verschiedenen Ausführungsbeispielen einer erfindungsgemäßen Schaltungsanordnung zur Auswertung der Signale eines induktiven Meßwertaufnehmers.

## Beschreibung der Ausführungsbeispiele

Figur 1 zeigt ein erstes Ausführungsbeispiel der erfindungsgemäßen Schaltungsanordnung. Eine Spule 10 eines nicht näher dargestellten induktiven Gebers ist über einen Koppelkondensator 11 mit einem Ladungsausgleichswiderstand 12, mit einem Trennwiderstand 13 sowie mit einem Spitzenwertdetektor 14 verbunden. Der Ladungsausgleichswiderstand 12 führt zu einer Stromversorgungsleitung 15, die mit einer stabilisierten Spannung gespeist wird. Der Trennwiderstand 13 ist mit dem invertierenden Eingang eines Differenzverstärkers 16 verbunden. Der Spitzenwertdetektor 14 enthält eine Diode 17, deren Kathode mit einem Spitzenwertspeicherkondensator 18 sowie mit einem Eingangswiderstand 19 eines Verstärkers 20 verbunden ist. Der Verstärker 20 ist als invertierende Verstärkerschaltung mit einem Operationsverstärker 21 realisiert. Die Verstärkungseinstellung erfolgt in bekannter Weise mit dem Eingangswiderstand 19, der mit dem invertierenden Eingang des Operationsverstärkers 21 verbunden ist, sowie mit einem Gegenkopplungswiderstand 22, der vom Ausgang des Operationsverstärkers 21 zum invertierenden Eingang führt. Der Bezugspegel des Verstärkers 20 ist durch einen Widerstand 23, der von der Stromversorgungsleitung 15 auf den nichtinvertierenden Eingang des Operationsverstärkers 21 führt, auf den Wert der stabilisierten Spannung der Stromversorgungsleitung 15 festgelegt. Der Ausgang des Operationsverstärkers 21 ist über einen Summierwiderstand 24 mit dem nichtinvertierenden Eingang des Differenzverstärkers 16 verbunden. Dieser Eingang ist weiterhin mit einem Mitkopplungskondensator 25 sowie mit einer Reihenschaltung verbunden, die einen Mitkopplungswiderstand 26 sowie eine Diode 27 enthält. Sowohl der Mitkopplungskondensator 25 als auch die Diode 27 führen zum Ausgangsanschluß 28 des Differenzverstärkers 16. Der Ausgang 28 ist über einen Arbeitswiderstand 29 mit der Stromversorgungsleitung 15 verbunden. Zwischen einer Masse 30 und dem Ausgang 28 steht das Ausgangssignal der erfindungsgemäßen Schaltungsanordnung zur Verfügung. Mit Masse 30 sind weiterhin verbunden der Spitzenwertspeicherkondensator 18 sowie ein Anschluß der Spule 10 des induktiven Meßwertaufnehmers.

Figur 2 zeigt ein zweites Ausführungsbeispiel dar erfindungsgemäßen Schaltungsanordnung. Diejenigen Elemente, die mit den in Figur 1 gezeigten Elementen übereinstimmen, sind mit derselben Bezugszahl wie in Figur 1 versehen. Beschrieben werden nur die Änderungen, die sich gegenüber der Schaltungsanordnung gemäß Figur 1 ergeben. Der hauptsächliche Unterschied besteht im Fehlen des Verstärkers 20. Der Eingangswiderstand 19 führt auf den Mittenanschluß eines zwischen die Versorgungsleitung 15 und Masse 30 geschalteten Spannungsteilers, der von den Widerständen 40, 41 gebildet wird. Der Mittenanschluß ist verbunden mit dem nichtinvertierenden Eingang des Differenzverstärkers 16, an dem weiterhin der Mitkopplungskondensator 25 angeschlossen ist. Der invertierende Eingang des Differenzverstärkers 16, ist mit dem Trennwiderstand 13 und mit einem an Masse angeschlossenen Arbeitspunkteinstellwiderstand 42 verbunden.

Figur 3 zeigt ein drittes Ausführungsbeispiel der erfindungsgemäßen Schaltungsanordnung. Auch in der in Figur 3 gezeigten Schaltung sind diejenigen Elemente, die mit den in den vorhergehenden Figuren gezeigten Elementen übereinstimmen, mit derselben Bezugszahl versehen. Der Koppelkondensator 11 ist unmittelbar am invertierenden Eingang des Differenzverstärkers 16 angeschlossen. An diesem Anschluß liegt auch ein Arbeitspunkteinstellwiderstand 50, der zu dem Mittenanschluß eines Spannungsteilers führt, der zwei Spannungsteilerwiderstände 51 und 52 enthält, die zwischen die Versorgungsleitung 15 und Masse 30 geschaltet sind. Der in Figur 2 gezeigte Spannungsteilerwiderstand 41, der zwischen dem nichtinvertierenden Eingang des Differenzverstärkers 16 und Masse 30 geschaltet ist, ist in der Schaltungsanordnung nach Figur 3 nicht mehr vorhanden.

Die Schaltungsanordnung gemäß Figur 1 arbeitet folgendermaßen:

Das in die Spule 10 des induktiven Meßwertaufnehmers induzierte Signal gelangt über den Koppelkondensator 11 auf den Spitzenwertdetektor 14. Der Meßwertaufnehmer ist beispielsweise ein auf die Düsennadel einer Einspritzdüse einer Brennkraftmaschine empfindlicher Nadelhubsensor. Das Signal dieses Sensors beginnt mit einer positiven, näherungsweise sinusförmigen Halbwelle, an die sich eine negative Halbwelle mit wenigstens demselben Betrag anschließt. Der Beginn des Signals fällt mit dem Start des Einspritzvorganges und das Ende des Signals mit dem Ende des Einspritzvorganges zusammen. Die Kenntnis des Einspritzbeginns oder des Einspritzendes oder beider Werte werden einem die Brennkraftmaschine steuernden Gerät zugeführt. Aus der Ermittlung der Zeitdifferenz, der Einspritzzeitdauer, ist die eingespritzte Kraftstoffmenge berechenbar, wenn die Einspritzdüsenabmessungen sowie der Betriebsdruck bekannt sind.

Die positive Halbwelle des Meßwertaufnehmers führt zu einer Aufladung des Spitzenwertspeicherkondensators 18 über die Diode 17. Die dem Koppelkondensator 11 entzogene Ladung wird von einem Strom durch den Ladungsausgleichswiderstand 12 fließenden Strom wieder ausgeglichen. Der Strom fließt solange, bis das Potential am Koppelkondensator wieder dem Wert der an der Versorgungsleitung 15 anliegenden stabilisierten Spannung entspricht. Die am Spitzenwertspeicherkondensator 18 liegende Spannung wird zur amplituden- und drehzahlabhängigen Schwellennachführung für den Differenzveratärker 16 verwendet, an dessen Ausgang 28 zunächst dann ein Signal auftreten soll, wenn das von der Spule 10 abgegebene Signal dan Wert der veränderlichen Schwellenspannung überschreitet. Die Schwellenspannung liegt am nichtinvertierenden Eingang des Differenzverstärkers 16. Sie wird abgeleitet einerseits von der am Spitzenwertspeicherkondensator 18 anliegenden Spannung, die im Verstärker 20 verstärkt wird und über den Summierwiderstand 24 an den nichtinvertierenden Eingang des Differenzverstärkers 16 gelangt, und andererseits von der am Ausgang 28 liegenden Spannung, die über den Mitkopplungswiderstand ebenfalls an den nichtinvertierenden Eingang des Differenzverstärkers 16 gelangt, sofern die Diode 27 in Durchlaßrichtung geschaltet ist. Dies ist dann der Fall, wenn von der Spule 10 kein Signal abgegeben wird und der Ausgang 28 des Differenzverstärkers 16 nahezu den Wert der stabilisierten Spannung auf der Stromversorgungsleitung 15 aufweist. Nur in diesem Betriebszustand ist die Diode 27 leitend und ermöglicht eine Verbindung zwischen dem Ausgang 28 und dem nichtinvertierenden Eingang des Differenzverstärkers 16, die als Mitkopplung wirkt. Mit der beschriebenen Schaltung arbeitet der Differenzverstärker 16 als Vergleicher.

Übersteigt die von der Spule 10 abgegebene Spannung die Schwellenspannung, dann entsteht am Ausgang 28 des Differenzverstärkers 16 ein negativer Spannungssprung. Dieser Spannungssprung signalisiert beispielsweise den Beginn des Einspritzvorgangs. Im weiteren Verlauf des von der Spule 10 abgegebenen Signals, etwa beim folgenden Nulldurchgang, wird die Schwelle in die andere Richtung wieder durchfahren und demzufolge entsteht am Ausgang ein positiver Spannungssprung. Dieser Spannungssprung ist ohne physikalische Bedeutung und braucht deshalb von einer nachgeschalteten Einrichtung nicht beachtet zu werden. Am Ende der negativen Halbwelle der von der Spule 10 abgegebenen Spannung wird die Schwelle in ursprünglicher Richtung wieder überschritten. Es entsteht dann in beschriebener Weise wieder ein negativer Spannungssprung am Ausgang 28, der das Einspritzende signalisiert.

Eine Änderung des Betrags der von der Spule 10 abgegebenen Spannung, beispielsweise bei Drehzahländerungen, Temperaturänderungen etc. haben keinen Einfluß auf die zeitliche Lage der Schaltflanken am Ausgang 28. Eine Eigenverstellung des Ausgangssignals 28 bezüglich des sich ändernden Eingangssignals wird durch die Schwellennachführung eliminiert. Die Störsicherheit der Schaltung, insbesondere die des Differenzverstärkers 16 ist gewährleistet durch die Mitkopplung über die Diode 27 und den Mitkopplungswiderstand 26, die dann wirksam ist, wenn die Ausgangsspannung am Ausgang 28 etwa gleich dem Wert der stabilisierten Spannung an der Versorgungsleitung 15 ist. Im anderen Betriebszustand, in dem die Diode 27 sperrt, sorgt der Mitkopplungskondensator 25 für eine dynamische Mitkopplung, die einer dynamischen Hysterese gleich kommt.

Der Arbeitswiderstand 29, der den Ausgang 28 mit der Stromversorgungsleitung 15 verbindet, ist dann erforderlich, wenn der Differenzverstärker 16 einen offenen Kollektorausgang aufweist. In anderen Ausführungsformen des Differenzverstärkers 16 kann dieser Arbeitswiderstand 29 auch entfallen. Der Widerstand 23, der zwischen die Stromversorgungsleitung 15 und den nichtinvertierenden Eingang des Operationsverstärkers 21 geschaltet ist, sorgt dafür, daß im Ruhezustand der Schaltung die Spannung am Spitzenwertspeicherkondensator 18 etwa gleich dem Wert der stabilisierten Spannung auf der Stromversorgungsleitung 15 ist.

Die Schaltungsanordnung nach Figur 2 unterscheidet sich von der Schaltungsanordnung nach Figur 1 hauptsächlich dadurch, daß die am Spitzenwertspeicherkondensator 18 liegende Spannung ohne zwischengeschaltete Verstärkerstufe auf den nichtinvertierenden Eingang des Differenzverstärkers 16 geschaltet ist. Im Ruhezustand wird die am nichtinvertierenden Eingang liegende Schwellenspannung durch die beiden Spannungsteilerwiderstände 40, 41 festgelegt. Über den Eingangswiderstand 19 wird auch die Spannung am Spitzenwertspeicherkondensator 18 auf diese Schwellenspannung gezogen. Eine flexible Arbeitspunkteinstellung ermöglicht der zwischen dem invertierenden Eingang des Differenzverstärkers 16 und Masse 30 geschalteten Arbeitspunkteinstellungswiderstand 42. Die positive Halbwelle des von der Spule 10 abgegebenen Signals führt im Spitzenwertdetektor 14 zu einer Spannungsänderung, die über das Widerstandsnetzwerk 19, 40, 41 zu einer Änderung der Schwellenspannung am nichtinvertierenden Eingang des als Vergleicher arbeitenden Differenzverstärkers 16 führt. Diese Schwellennachführung ist erst bei Überschreitung der Schwellspannungen von Diode 17 bei großen Signalen wirksam, und wird langsam durch Eingangswiderstand 19 wieder auf das Potential von Spannungsteilerwiderständen 40, 41 ausgeglichen. Wichtig ist aber der Haupteffekt, daß bei positivem Puls der Komparator 16 auslöst.

Die Schaltungsanordnung nach Figur 3 geht aus der Schaltung nach Figur 2 hervor durch Weglassen des zwischen dem nichtinvertierenden Eingang des Differenzverstärkers 16 und Masse 30 geschalteten Spannungsteilerwiderstands 41 und durch Abänderung der Widerstände 12, 13, 19. Der Koppelkondensator 11 liegt in der Schaltungsanordnung nach Figur 3 unmittelbar am invertierenden Eingang des Differenzverstärkers 16. Der Ladungsausgleich am Koppelkondensator 11 erfolgt in diesem Ausführungsbeispiel über den Widerstand 50, der am Mittenanschluß des zwischen die Stromversorgungsleitung 15 und Masse 30 geschalteten Spannungsteilers 51, 52 angeschlossen ist. Der Arbeitspunkt am invertierenden Eingang des Differenzverstärkers 16 wird durch die drei Widerstände 50, 51, 52 festgelegt. Zweckmäßigerweise wird der Wert des Widerstands 51 im Verhältnis zu den Werten der beiden Widerstände 50, 52 vergleichsweise klein gewählt, so daß der Arbeitspunkt annähernd mit dem Wert der stabilisierten Spannung auf der Stromversorgungsleitung 15 übereinstimmt. Da die Ruhespannung am invertierenden Eingang des Differenzverstärkers 16 wenigstens annähernd gleich der stabilisierten Spannung auf der Versorgungsleitung 15 ist, muß auch die Schwellenspannung am nichtinvertierenden Eingang des als Vergleicher arbeitenden Differenzverstärkers 16 etwa diesen Wert aufweisen. Deshalb wurde gegenüber der Schaltungsanordnung nach Figur 2 der gegen Masse 30 geschaltete Spannungsteilerwiderstand 41 weggelassen, so daß der

4

Schwellenwert im Ruhezustand über den verbleibenden Spannungsteilerwiderstand 40 auf annähernd den Wert der stabilisierten Spannung gezogen werden kann. Die Schaltungsanordnung nach Figur 3 weist gegenüber der Schaltungsanordnung nach Figur 2 eine geringere Toleranz der Schwellenspannung im Ruhezustand wegen des Bezugs auf die stabilisierte Spannung der Stromversorgungsleitung 15 auf.

**Patentansprüche**

1. Schaltungsanordnung zur Auswertung der Signale eines vorzugsweise an einer Brennkraftmaschine angeordneten induktiven Meßwertaufnehmers mit einer Spule (10), mit einem Vergleicher (16), mit einem Spitzenwertdetektor (14) und einem Spitzenwertspeicher (18) sowie mit Mitteln zur Spitzenwertspeicherentladung (12, 50, 51) und Mitteln (23, 40, 41) zur Einstellung wenigstens einer Schwelle des Vergleichers (16), dadurch gekennzeichnet, daß die Spule (10) des induktiven Meßwertaufnehmers mit einer Seite eines Koppelkondensators (11) verbunden ist, dessen andere Seite mit dem als Differenzverstärker beschalteten Vergleicher (16) verbunden ist, zwischen dessen Ausgang (28) und dessen nicht invertierenden Eingang ein Mitkopplungskondensator (25) geschaltet ist, wobei Widerstände (12, 50, 51) zum Ladungsausgleich auf dem Koppelkondensator (11) vorgesehen sind.

2. Schaltungsanordnung nach Anspruch 1, dadurch gekennzeichnet, daß am Koppelkondensator (11) der Spitzenwertdetektor (14) angeschlossen ist.

3. Schaltungsanordnung nach Anspruch 2, dadurch gekennzeichnet, daß der Spitzenwertdetektor (14) ein in Reihe mit einem Schalter, vorzugsweise einer Diode (17), geschalteter Spitzenwertspeicherkondensator (18) ist.

4. Schaltungsanordnung nach Anspruch 3, dadurch gekennzeichnet, daß der Spitzenwertspeicherkondensator (18) über einen Eingangswiderstand (19) mit einem Eingang des Differenzverstärkers (16) verbunden ist.

5. Schaltungsanordnung nach Anspruch 4, dadurch gekennzeichnet, daß zwischen dem Spitzenwertspeicherkondensator (18) und dem einen Eingang des Differenzverstärkers (16) ein Verstärker (20) geschaltet ist.

6. Schaltungsanordnung nach einem der vorhergehenden Ansprüche, dadurch gekennzeichnet, daß der andere Eingang des Differenzverstärkers (16) über einen Trennwiderstand (13) mit dem Koppelkondensator (11) verbunden ist.

7. Schaltungsanordnung nach einem der vorhergehenden Ansprüche, dadurch gekennzeichnet, daß der andere Eingang des Differenzverstärkers (16) über einen Arbeitspunkteinstellwiderstand (42) an Schaltungsmasse (30) angeschlossen ist.

8. Schaltungsanordnung nach einem der vorhergehenden Ansprüche, dadurch gekennzeichnet, daß der Koppelkondensator (11) am anderen Eingang des Differenzverstärkers (16) angeschlossen ist und daß der Koppelkondensator (11) weiterhin über einen Widerstand (50) mit dem Mittenabgriff eines zwischen eine Stromversorgungsleitung (15) und Masse (30) geschalteten Spannungsteilers (51, 52) verbunden ist.

**Claims**

1. Circuit arrangement for the evaluation of the signals of an inductive measuring sensor, which is preferably arranged on an internal-combustion engine, having a coil (10), having a comparator (16), having a peak value detector (14) and a peak value store (18), and having means for discharging (12, 50, 51) the peak value store and means (23, 40, 41) for setting at least one threshold of the comparator (16), characterised in that the coil (10) of the inductive measuring sensor is connected to one side of a coupling capacitor (11) whose other side is connected to the comparator (16), which is connected as a differential amplifier, and between whose output (28) and non-inverting input there is connected a positive feedback capacitor (25), resistors (12, 50, 51) being provided for charge matching on the coupling capacitor (11).

2. Circuit arrangement according to Claim 1, characterised in that the peak value detector (14) is connected to the coupling capacitor (11).

3. Circuit arrangement according to Claim 2, characterised in that the peak value detector (14) is a peak value storage capacitor (18) connected in series with a switch, preferably a diode (17).

4. Circuit arrangement according to Claim 3, characterised in that the peak value storage capacitor (18) is connected via an input resistor (19) to one input of the differential amplifier (16).

5. Circuit arrangement according to Claim 4, characterised in that an amplifier (20) is connected between the peak value storage capacitor (18) and the one input of the differential amplifier (16).

6. Circuit arrangement according to one of the preceding claims, characterised in that the other input of the differential amplifier (16) is connected via an isolating resistor (13) to the coupling capacitor (11).

7. Circuit arrangement according to one of the preceding claims, characterised in that the other input of the differential amplifier (16) is connected via an operating point setting resistor (42) to the circuit earth (30).

8. Circuit arrangement according to one of the preceding claims, characterised in that the coupling capacitor (11) is connected to the other input of the differential amplifier (16), and in that the coupling capacitor (11) is furthermore connected via a resistor (50) to the centre tap of a voltage divider (51, 52) connected between a power supply line (15) and earth (30).

**Revendications**

1. Circuit pour l'exploitation du signal d'un capteur inductif de valeur de mesure disposé de préférence sur un moteur à combustion interne, avec une bobine (10), avec un comparateur (16), avec un détecteur de valeur de pointe (14), et avec une mémoire de valeur de pointe (18), ainsi qu'avec des moyens (12, 50, 51) pour la décharge de la mémoire de valeur de pointe et des moyens (23, 40, 41) pour le réglage d'au moins un seuil du comparateur (16), circuit caractérisé en ce que la bobine (10) du capteur inductif de valeur de mesure est reliée à un côté d'un condensateur de couplage (11), dont l'autre côté est relié à un comparateur (16) branché en amplificateur différentiel, et entre la sortie (28) duquel et l'entrée non inversée duquel est branché un condensateur de rétro-action (25), des résistances (12, 50, 51) étant prévues pour la compensation de charge sur le condensateur de couplage (11).

2. Circuit selon la revendication 1, caractérisé en ce qu'au condensateur de couplage (11) est raccordé le détecteur de valeur de pointe (14).

3. Circuit selon la revendication 2, caractérisé en ce que le détecteur de valeur de pointe (14) est un condensateur (18) de mémorisation de valeur de pointe branché en série avec un commutateur, de préférence une diode (17).

4. Circuit selon la revendication 3, caractérisé en ce que le condensateur (18) de mémorisation de valeur de pointe est relié par l'intermédiaire d'une résistance d'entrée (19) à une entrée de l'amplificateur différentiel (16).

5. Circuit selon la revendication 4, caractérisé en ce qu'entre le condensateur (18) de mémorisation de valeur de pointe et l'une des entrées de l'amplificateur différentiel (16) est branché un amplificateur (20).

6. Circuit selon une des précédentes revendications, caractérisé en ce que l'autre entrée de l'amplificateur différentiel (16) est reliée, par l'intermédiaire d'une résistance de séparation (13), au condensateur de couplage (11).

7. Circuit selon une des précédentes revendications, caractérisé en ce que l'autre entrée de l'amplificateur différentiel (16) est raccordée à la masse (30) du circuit, par l'intermédiaire d'une résistance (42) de réglage du point de fonctionnement.

8. Circuit selon une des précédentes revendications, caractérisé en ce que le condensateur de couplage (11) est raccordé à l'autre entrée de l'amplificateur différentiel (16) et en ce que le condensateur de couplage (11) est en outre raccordé par l'intermédiaire d'une résistance (50) à la prise médiane d'un diviseur de tension (51, 52) branché entre une liaison d'alimentation en courant (15) et la masse (30).

FIG. 1

FIG. 2

FIG. 3